(19) Europäisches Patentamt
European Patent Office
Office européen des brevets

(11) **EP 3 631 762 B1**

(12) **EUROPEAN PATENT SPECIFICATION**

(45) Date of publication and mention
of the grant of the patent:
**01.12.2021 Bulletin 2021/48**

(21) Application number: **18730297.1**

(22) Date of filing: **01.06.2018**

(51) Int Cl.:
*G06T 11/00* (2006.01)   *G06T 7/62* (2017.01)

(86) International application number:
**PCT/EP2018/064480**

(87) International publication number:
**WO 2018/220182 (06.12.2018 Gazette 2018/49)**

(54) **SYSTEMS AND METHODS TO PROVIDE CONFIDENCE VALUES AS A MEASURE OF QUANTITATIVE ASSURANCE FOR ITERATIVELY RECONSTRUCTED IMAGES IN EMISSION TOMOGRAPHY**

SYSTEME UND VERFAHREN ZUR BEREITSTELLUNG VON KONFIDENZWERTEN ALS MESSWERT FÜR DIE QUANTITATIVE VERSICHERUNG FÜR ITERATIV REKONSTRUIERTE BILDER IN DER EMISSIONSTOMOGRAFIE

SYSTÈMES ET PROCÉDÉS POUR FOURNIR DES VALEURS DE CONFIANCE EN TANT QUE MESURE D'ASSURANCE QUANTITATIVE POUR DES IMAGES RECONSTRUITES DE MANIÈRE ITÉRATIVE EN TOMOGRAPHIE D'ÉMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2017 US 201762514039 P**

(43) Date of publication of application:
**08.04.2020 Bulletin 2020/15**

(73) Proprietor: **Koninklijke Philips N.V.**
**5656 AG Eindhoven (NL)**

(72) Inventors:
• **ANDREYEV, Andriy**
**5656 AE Eindhoven (NL)**
• **BAI, Chuanyong**
**5656 AE Eindhoven (NL)**
• **ZHU, Yang-Ming**
**5656 AE Eindhoven (NL)**
• **MANIAWSKI, Piotr, Jan**
**5656 AE Eindhoven (NL)**

(74) Representative: **Philips Intellectual Property & Standards**
**High Tech Campus 5**
**5656 AE Eindhoven (NL)**

(56) References cited:
**US-A1- 2008 267 477**

• **WEISHI XIA ET AL: "Region of Interest Evaluation of SPECT Image Reconstruction Methods Using a Realistic Brain Phantom", IEEE TRANSACTIONS ON NUCLEAR SCIENCE, IEEE SERVICE CENTER, NEW YORK, NY, US, vol. 44, no. 3, June 1997 (1997-06), pages 1336-1341, XP011087690, ISSN: 0018-9499, DOI: 10.1109/23.597010**

**Description**

**FIELD**

The following relates generally to the medical imaging arts, medical image interpretation arts, image reconstruction arts, and related arts.

**BACKGROUND**

Iterative image reconstruction in emission imaging (e.g. positron emission tomography, PET, or single photon emission computed tomography, SPECT) has become an established approach for reconstructing medical diagnostic quality images. In spite of this broad acceptance, there is little assurance that a given pixel value or sum of values inside regions of interest (ROIs) accurately represents quantitative clinical information. For example, the number of detected counts can fluctuate greatly from the actual injected activity due to the low radiopharmaceutical dosage typically administered, limited acquisition time and consequent large instance-to-instance statistical variability. This further exacerbated by the size of the ROI and is further affected by partial volume effects (PVE) when the size of a tumor is comparable with the intrinsic spatial resolution of the imaging device. Apart from data deviations due to statistical noise or patient motion for example, there is another major issue - convergence. Theoretically it can be demonstrated that iterative algorithms such as maximum likelihood expectation maximization (MLEM) can be fully convergent under ideal circumstances (i.e., iterated until stable point, representing the optimal solution of the unknown radiotracer distribution in relation to the measured data). In reality, however, full convergence is difficult to achieve. Typically, the iterative reconstruction is terminated prior to full convergence since in practice extending the iterative reconstruction to full convergence can introduce unacceptable noise levels into the reconstructed image. Therefore, in most cases the iterative reconstruction is stopped early in order to balance the contrast recovery and iteration-related amplification of noise.

US2008/267477 describes a method for iterative image processing to reconstruct a PET image. The method has steps of estimating a preliminary image, selecting an element in that image and performing iterative reconstruction until the difference between the successively processed images is below a predefined threshold for the selected element.

In iterative reconstruction, different structures may have different speed of convergence. It often takes more iterations for small structures (i.e., those represented by high frequencies) to converge. However, when more iterations are used, noise may increase as well. Therefore, clinical reconstruction protocols usually use a pre-defined number of iterations and subsets that have been optimized for the general case of clinical applications. However, when reconstruction finishes, some small lesions may not be fully converged, i.e., their values would change significantly if further iterations were to be performed. This leads to quantitative uncertainty of such lesions. For example, a certain (hypothetical) lesion would have a standardized uptake value (SUV) of 5.0 at full convergence, but when the reconstruction with certain non-specifically optimized number of iterations is finished, it is not converged yet, and the reconstructed image only shows SUV of 2.5. The size of the ROI, point spread function (PSF) of the device and the number of acquired counts in the ROI also directly affect the confidence of the reported SUV value.

In view of the foregoing, when a physician is presented with the final reconstructed image, there is usually little assurance that the values in the image are quantitatively accurate for all the regions/objects in the image whenever iterative reconstruction is involved. Typically, the physician is provided with little or no information as to the reliability (or lack thereof) of quantitative values. Nonetheless, PET or SPECT images are increasingly interpreted quantitatively for treatment-determinative clinical purposes such as early detection of the success or failure of radiation therapy, chemotherapy, or other oncology therapy regimens. Physicians desire to draw clinical conclusions from small changes in successive imaging examinations. For example, a change in tumor size (e.g., a change in physical size, a change in a maximum SUV value of the tumor, and the like) of a few percent may be interpreted by the physician as indicative of therapeutic efficacy leading to continuation of the therapy - but such a small change might instead be due to incomplete convergence, PVE, and/or statistical fluctuations.

The following discloses new and improved systems and methods to overcome these problems.

**SUMMARY**

In one disclosed aspect, a non-transitory storage medium in accordance with claim 1 is provided. The non-transitory storage medium stores instructions readable and executable by an imaging workstation including at least one electronic processor operatively connected with a display device to perform an image reconstruction method. The method includes: reconstructing imaging data acquired by an image acquisition device using an iterative image reconstruction algorithm with a fixed number of iterations to generate at least one reconstructed image; delineating one or more contours of the at least one reconstructed image to determine a region of interest (ROI) of the at least one reconstructed image; computing at least one quality metric value of the ROI, the at least one quality metric value including at least a convergence quality metric; wherein computing the convergence quality metric of the ROI includes computing an intensity versus iteration curve to generate a convergence curve for the ROI (103, 32), and determining a slope of the convergence curve to determine a convergence value for the ROI (112, 30). The method further includes displaying, on the display device, the at least one quality metric value including the generated convergence curve, and the at least one reconstructed image showing the ROI.

One advantage resides in improving an overall confidence of a medical diagnosis by automatically providing information on convergence of the iterative image reconstruction for regions of interest.

Another advantage resides in providing a medical professional with images corrected for incomplete convergence without introducing excessive noise amplification as may occur if the iterative image reconstruction were continued to full convergence.

Another advantage resides in augmenting medical images with quality information relating to the quantitative accuracy of specific regions of interest identified by medical personnel.

Another advantage resides in providing improved image reconstruction efficiency by facilitating the use of a reduced number of image reconstruction iterations while providing information as to the impact of the reduced number of iterations on image quality for clinically significant regions of interest.

Another advantage resides in providing a quantitative basis for medical professional to request an additional reconstruction of an image with a different number or iterations or parameter settings.

A given embodiment may provide none, one, two, more, or all of the foregoing advantages, and/or may provide other advantages as will become apparent to one of ordinary skill in the art upon reading and understanding the present disclosure.

## BRIEF DESCRIPTION OF THE DRAWINGS

The disclosure may take form in various components and arrangements of components, and in various steps and arrangements of steps. The drawings are only for purposes of illustrating the preferred embodiments and are not to be construed as limiting the invention.

FIGURE 1 diagrammatically shows image reconstruction system according to one aspect.
FIGURE 2 shows an exemplary flow chart operation of the system of FIGURE 1; and
FIGURE 3 illustratively shows a display of the system of FIGURE 1.

## DETAILED DESCRIPTION

In current clinical practice, an image is reconstructed by the imaging technician using an iterative image reconstruction. The number of iterations used is pre-optimized, and both the technician and the doctor are provided only with the final reconstructed image. In practice, various deficiencies can be present.

First, the convergence may be incomplete. This is especially a problem with small features (as in typical small tumors) with high spatial frequency components.

Second, there may be partial volume effect (PVE) issues. PVE arises when the tumor is comparable in size to the intrinsic resolution of the imaging device (which may not correspond to the voxel size chosen for the image reconstruction). In this case the image voxels of the tumor may have artificially low values due to blending with neighboring non-tumor voxels (assuming the tumor is a "hot spot' i.e. a region of higher activity).

Third, errors can arise if the count density is too low at a feature. In general, a certain minimum count density (e.g. 100 counts/voxel) is needed for good image quality, and if the counts are significantly below this minimum then results are unreliable. Since emission imaging employs low radiopharmaceutical dosage to limit patient radiation exposure, the counts are usually low, and random statistical fluctuations from one imaging session to the next can result in a tumor having low count density in some sessions but not others.

These errors are increasingly problematic as efforts are being made to extend the usefulness of medical imaging to assess effectiveness of oncology therapies at earlier stages in the therapy. For example, it is desired to detect reduction in tumor size earlier in the therapy, when the reduction may be small, e.g. only 5-10% or even less. For detecting these small clinical changes, errors due to poor convergence, PVE, and/or low count density can lead to erroneous clinical conclusions.

The following discloses approaches to provide medical images with one or more quantitative metrics, on a per-region of interest (per-ROI) basis, to assist in assessing clinical significance of imaging results. The disclosed improvement entails modifying the image reconstruction process to generate information on completeness of convergence (e.g. measured on a scale of 0-1 where "1" is the final convergence), PVE, and count density. These form convergence, PVE, and count density maps that (in some embodiments) are an output of the improved system. For the convergence map, the approach is to calculate intensity versus iteration for each voxel, and look at the slope of this curve for the last few iterations before stopping. Optionally, a few additional iterations may be performed that go beyond the stopping point to provide bilateral data for quantifying the slope (where zero slope equals convergence and a large slope corresponds to not-yet-converged).

With the convergence, and count density maps generated at the voxel level, the convergence and count density quality metrics are readily computed for any chosen ROI by averaging the per-voxel data provided by the respective maps over the volume of the ROI. The ROI may be delineated by the technician, by the doctor, or by some automated process (e.g. automated or semi-automated contouring, populating ROIs from a previous imaging session, optionally with adjustment, or so forth). The PVE score is object-size dependent and can be defined after the ROI has been defined by the doctor.

In a variant embodiment, the convergence, PVE, and count density ROI quality metrics are combined, e.g. as a weighted sum, to produce an overall quality metric for each ROI.

In another variant embodiment, the convergence curve (i.e. voxel intensity versus iteration curve) for the actual ROI voxels is compared with a standard convergence curve for the particular type of tumor, based on the observation that a given type of tumor has a "typical" convergence curve for a given image reconstruction algorithm. Based on this comparison, the error due to incomplete convergence can be quantitatively estimated and this information provided to the doctor. In one contemplated embodiment, the doctor is provided with a selection button to adjust the ROI in the image for incomplete convergence. If, for example, the ROI convergence metric is 0.8 indicating intensities are only 80% of the converged value, then the correction entails multiplying by 1/0.8=1.25 to generate the converged value (e.g., in terms of SUV) for a given ROI.

In clinical image viewer applications, conventional quantitative two-dimensional (2D) or three-dimensional (3D) ROI drawn by the user include reports the SUV information (mean, min, max, standard deviation) in the ROI. In embodiments disclosed herein, further information such as a "convergence score" is computed and included in ROI reports. The convergence score can be presented in the form of convergence curve (e.g., SUVmean values plotted vs iteration number) calculated for the ROI drawn, or it can be a single numeric value (e.g., relative change between SUVmean of current and previous iterations in the current ROI) or a color-coded convergence score map can be displayed, showing the convergence on a per-voxel basis. The uncertainty related to Poisson statistics or ROI size or spatial resolution degradation is also optionally added in the form of error bars or separate indicators. With the combined confidence score, physicians can easily estimate how far away the ROI values are from convergence, minimizing the diagnostic uncertainty associated with the particular reconstruction protocol (iteration and subset numbers), as well as easily take into consideration all other degrading factors in conventional ROI reports.

The following discloses approaches for presenting the clinical user with the information about potential quantitative inaccuracies in the form of an "easy-to-digest" confidence score. As noted earlier, the sources of inaccuracies include ROI size (compared with the intrinsic resolution of the imaging device, captured as a PVE), related data statistics, iterative algorithm performance. In one illustrative implementation, the variability score $\sigma$ is defined as:

$$\sigma = s\sqrt{n}/n \qquad (1)$$

to show that relative noise-related error increases when the number of counts is lower. Here, s is a value that may include the sensitivity, attenuation and other performance related factors (can be spatially variant), n is the number proportional to local radiotracer uptake within the ROI.

As another aspect, the partial volume effects (PVE) in relation to the ROI size or ROI volume, and whether point spread function (PSF) modelling has been used or not during the image reconstruction is accounted for. It is evident that the smaller the selected ROI, the more affected by PVE will be the quantitative measures derived from it. Such partial volume effects can be estimated from real phantom measurements and arranged into a lookup table, for each scanner model and ROI size.

Further, the location of the ROI and whether the motion has been detected for that region also may be taken into account. For example, ROI contained in lung region may be evaluated differently from other regions due to respiratory motion (if there were no additional patient motion observed).

For convergence related confidence score calculation, during iterative reconstruction intermediate iteration images are saved. For ordered subset expectation maximization (OSEM)-like algorithms, depending on the number of subsets, inter-iteration-subset-update results may also be saved. Image compression techniques can be used to save disk storage space, to facilitate faster retrieval from remote network storage location and to allow for more efficient calculation of the ROI convergence curve for each ROI drawn. Another approach for reducing memory usage is to store only the last few iterations, since the convergence curve near the final iteration is of principle interest. When a physician draws an ROI, in addition to all typical values that are displayed (e.g., SUVmean, SUVmin, SUVmax, etc), the convergence curve for that given ROI can be displayed together or in a separate side panel, which is calculated from all saved iteration results of the given reconstruction.

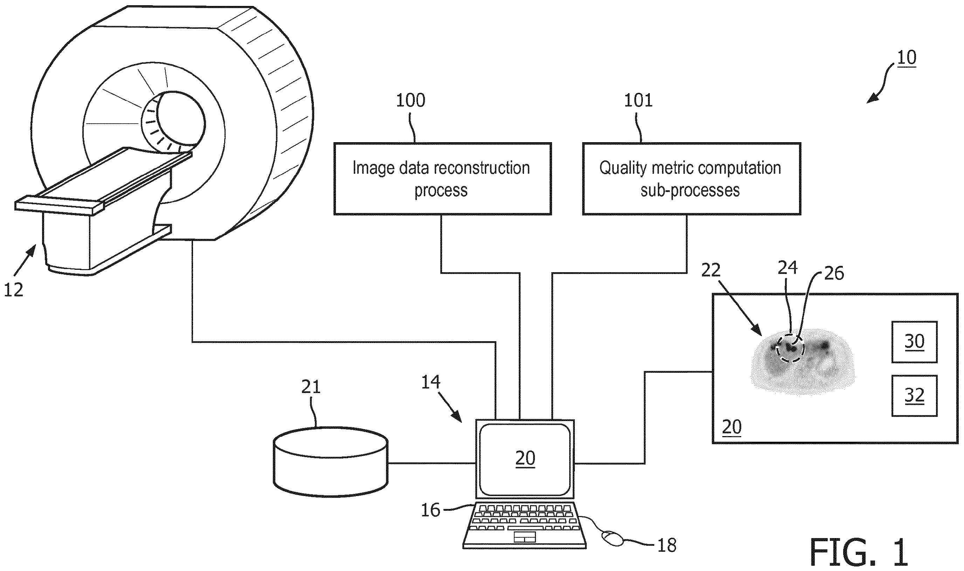

With reference to FIGURE 1, an illustrative medical imaging system **10** is shown. As shown in FIGURE 1, the system **10** includes an image acquisition device **12**. In one example, the image acquisition device **12** can comprise an emission imaging device (e.g., a positron emission tomography (PET) device, a single photon emission computed tomography (SPECT) device, and the like); however, it will be appreciated that any other suitable imaging modality (e.g., magnetic resonance, computed tomography, ultrasound, X-ray, and the like, as well as hybrid systems, such as PET/CT) may be used. The system **10** also includes a computer or workstation or other electronic data processing device **14** with typical components, such as at least one electronic processor **16**, at least one user input device (e.g., a mouse, a keyboard, a trackball, and/or the like) **18**, and a display device **20**. In some embodiments, the display device **20** can be a separate component from the computer **14**. The workstation **14** can also include one or more databases **21** (stored in a non-transitory storage medium such as RAM or ROM, a magnetic disk, or so forth), and/or the workstation can be in electronic communication with one or more databases (not shown) (e.g., an electronic medical record (EMR) database, a picture archiving and communication system (PACS) database, and the like).

The at least one electronic processor **16** is operatively connected with a non-transitory storage medium (not shown) that stores instructions which are readable and executable by the at least one electronic processor **16** to perform disclosed operations including performing an image reconstruction method or process **100**. Additionally, the non-transitory storage medium may store instructions readable and executable by the electronic processor **16** to perform one or more quality metric computation sub-processes **101** in conjunction with reconstructing one or more images, including for example computing a quality metric of a region of interest (ROI) of the images that includes at least one of (1) a convergence quality metric; (2) partial volume effect (PVE); and (3) a local count quality metric, each of which is described in more detail below. The non-transitory storage medium may, for example, comprise a hard disk drive, RAID, or other magnetic storage medium; a solid state drive, flash drive, electronically erasable read-only memory (EEROM) or other electronic memory; an optical disk or other optical storage; various combinations thereof; or so forth. In some examples, the image reconstruction method or process **100** and/or the one or more quality metric computation sub-processes **101** may be performed by cloud processing.

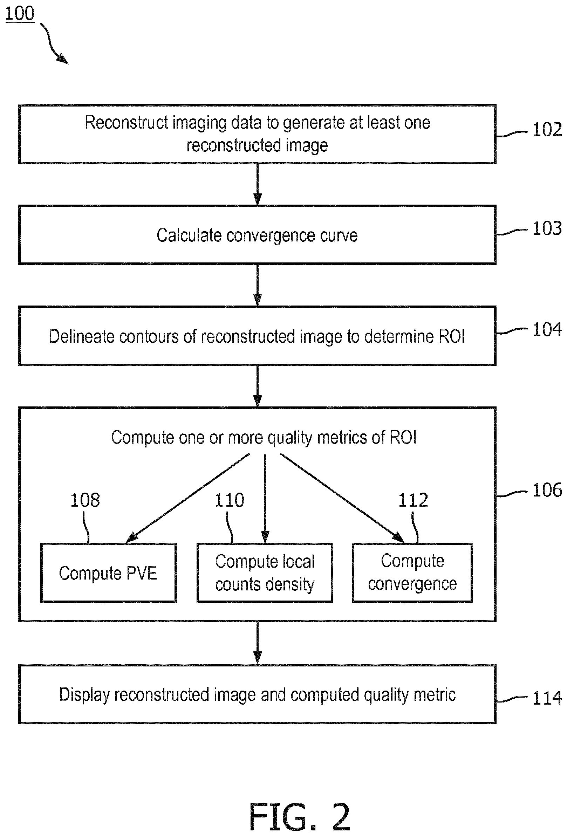

With reference to FIGURE 2, the image reconstruction method **100** including the quality metric computation sub-process(es) **101** is diagrammatically shown as a flowchart. At **102**, imaging data acquired by the image acquisition device **12** is reconstructed using an iterative image reconstruction algorithm to generate at least one reconstructed image **24**. This can be done with any suitable image reconstruction algorithm. For example, the imaging data can be reconstructed by a suitable number of iterations in order to generate the at least one reconstructed image **24**. The number of iterations is typically fixed for a given reconstruction task (e.g. defined by the imaged anatomy, reason for examination, and/or so forth). Without loss of generality, it is assumed that the iterative reconstruction **102** executes N iterations to generate the reconstructed image. Concurrently, at **103** the convergence curve is computed for each voxel or group of voxels by computing the intensity as a function of iteration for at least the last few iterations. The slope of this convergence curve at N can be plotted as a function of voxel to form a convergence map (where slope=0 at iteration N corresponds to full convergence).

At **104**, one or more contours **26** (see FIGURE 1) of the at least one reconstructed image **24** are delineated to determine a region of interest (ROI) **28** of the at least one reconstructed image. In one example, the contours **26** can be delineated by receiving, via the user input device **18**, a user input from a medical professional (e.g., one or more key strokes of a keyboard, one or more mouse clicks, etc.). In another example, the contours **26** can be delineated by performing an automated or semi-automated process with the at least one electronic processor **16**. In a further example, the contours **26** can be delineated by populating the reconstructed image **22** with contours from a previous imaging session that is stored in the database **20**.

At **106**, at least one quality metric value **30** (see FIGURE 1) of the ROI **24** is computed. The at least one quality metric value **30** includes at least one of a partial volume effect (PVE) quality metric (**108**), a local count quality metric (**110**), and a convergence quality metric (**112**), each of which is described in more detail below.

In one example, at **108**, the quality metric value **30** is a partial volume effect (PVE) quality metric ($Q_{PVE}$). The partial volume effect (PVE) quality metric ($Q_{PVE}$) provides a measure of the reduction in ROI signal intensity when the size (d) of the object (which can be diameter for spherical objects) in the ROI becomes less than twice the imaging system resolution (r, assuming isotropic resolution in 3D). Using a linear approximation, the partial volume effect ($Q_{PVE}$) may be estimated as follows:

$$Q_{PVE} = \begin{cases} 1 & \text{if} \quad d \geq 2r \\ \left(\dfrac{d}{2r}\right)^3 & \text{if} \quad d < 2r \end{cases} \qquad (2)$$

Equation (2) assumes a spherical ROI and isotropic imaging system resolution (i.e. the resolution r is the same in x, y, and z directions), as well as a cubic function decrease in $Q_{PVE}$ with ROI size below the threshold 2r. Various adjustments in the system resolution r can be made to account for nonlinearity and/or anisotropy of the tumor (or other ROI) and/or imaging system resolution, different point spread function (PSF) characteristics of the imaging device, or so forth. Using Equation (2), $Q_{PVE} = 1$ (or some other chosen maximum value indicating maximal quality) for ROI whose size is greater than 2r (therefore no PVE is present) and decreases (linearly in the case of Equation (2)) with decreasing ROI size below 2r.

The PVE is expected to be a systematic error which systematically decreases the ROI signal. This is due to the typically higher signal from the ROI (assuming the ROI corresponds to a "hot" tumor) compared with the surrounding tissue, such that the PVE results in signal spillover into the surrounding volume. Optionally, therefore, a proposed corrected image with partial volume correction may be provided in cases where $Q_{PVE} < 1$. In the proposed corrected image, the ROI (e.g. tumor) signal is enhanced by a suitable factor such as $1/Q_{PVE}$ to correct for the expected ROI signal reduction due to PVE. Optionally, the correction further includes suppressing the signal outside the ROI (i.e. tumor) to account for spillover into the surrounding volume.

In another illustrative example, at **110**, the quality metric value **30** is a local counts quality metric ($Q_{LC}$), related to number J of real acquired counts that have LOR intersecting the ROI. TOF can be optionally used to better determine the metric $Q_{LC}$. The local counts quality metric ($Q_{LC}$) provides a measure of the anticipated reduction in image quality due to a low local count at the ROI. In one contemplated implementation of this quality metric, the confidence $Q_{LC}$ is defined as $Q_{LC} = \sqrt{J}$ .

In some embodiments, the PVE quality metric ($Q_{PVE}$) and/or the local counts quality metric ($Q_{LC}$) can be computed by generating a map (not shown). To do so, a curve is generated (e.g., by the at least one electronic processor **16**) in which an ROI intensity on a per-voxel scale is plotted against the number of reconstruction iterations. A volume value of the ROI **28** in the at least one reconstructed image **24** is determined (e.g., by the at least one electronic processor **16**). The PVE quality metric ($Q_{PVE}$) and/or the local counts quality metric ($Q_{LC}$) are then computed by averaging the per-voxel data of the generated map over the volume value of the ROI **24**.

In a further example, at **112**, the quality metric value **30** is a convergence quality metric ($Q_{CONV}$). The convergence quality metric ($Q_{CONV}$) provides a measure of the anticipated reduction in image quality due to incomplete convergence. In iterative image reconstruction, the number of iterations (designated N herein without loss of generality) is typically chosen to be a value that is less than would be necessary to achieve full convergence. This is done in part to increase computational efficiency, but also to avoid excessive noise which can be introduced by continuing to iterate toward full convergence. The extent of convergence for a region of interest can be estimated from the rate of change of the ROI signal near the end of the iterative image reconstruction process. By definition, at full convergence the change in ROI signal between successive iterations goes to zero. If the iterative reconstruction terminates at *N* iterations (where N is some positive integer), then denoting the ROI signal (e.g., average or sum-total signal over the volume of the ROI) at the last iteration as $S_{ROI}^{(N)}$ and the ROI signal at the previous iteration M as $S_{ROI}^{(M)}$ , a suitable estimate for the convergence quality metric is:

$$Q_{CONV} = 1 - \left[ \frac{\left| S_{ROI}^{(N)} - S_{ROI}^{(M)} \right|}{\frac{1}{2} \cdot \left( S_{ROI}^{(N)} + S_{ROI}^{(M)} \right)} \right] \tag{2}$$

where the iterative update index *N* is greater than *M*. $Q_{CONV}$ score can provide clear guidance to the clinical user on how to optimize the number of iterations for a given reconstruction.

In some embodiments, the convergence value can be computed by generating a convergence map **32**. To do so, an intensity versus iteration curve is plotted (e.g., by the at least one electronic processor **16**) to generate a convergence curve for each map element (corresponding to the image volume element). The map can be optionally displayed on the display device **20**. In some examples, the generated convergence curve can be compared with a standard convergence curve (i.e., stored in the database **21**) for the ROI **24**. From the comparison, an error if the intensity of the ROI **24** in the reconstructed image **22** is estimated due to incomplete convergence. In other examples, when incomplete convergence occurs, a user input can be received from the medical professional, via the user input device **18**, by the at least one electronic processor **16** to control the display device **20** to adjust the displayed reconstructed image **22**. In further examples, the medical professional can retrieve one or more images of a first study stored in the database **21**, and apply the retrieved images to subsequent studies to report ROI means, maximum values, minimum values, and the like. For example, the medical professional can examine the same ROIs for the computed quality metric on multiple sets of images. The medical professional can compare variances between multiple different studies. This determined variance can be stored in the database **21** for use in future studies.

In some embodiments, an overall quality metric value can be generated for the ROI **24** by combining the convergence ($Q_{CONV}$), the partial volume correction ($Q_{PVE}$), and the count density ($Q_{LC}$). The combined overall quality metric can be displayed on the display device **20**.

At **114**, the at least one quality metric value **26** and the at least one reconstructed image **22** showing the ROI **24** are displayed on the display device **20**. In one example, in conjunction with **108**, the PVE quality metric ($Q_{PVE}$) is displayed on the display device **20** along with the at least one reconstructed image **22**. In addition, a proposed correction of the ROI intensity computed based on the PVE quality metric ($Q_{PVE}$) of the generated map can also be displayed on the display device **20**. In another example, in conjunction with **110,** the local counts quality metric ($Q_{LC}$) is displayed on the display device **20** along with the at least one reconstructed image **22**. In a further example, in conjunction with **112**, the convergence quality metric ($Q_{CONV}$) is displayed on the display device **20** along with the at least one reconstructed image **22**.

In some embodiments, one or more of the operations **102-114** can be performed automatically or semi-automatically. For example, the contouring operation described at **104** can be performed such that the contours are delineated automatically (or semi-automatically) by the at least one electronic processor **16**. The quality metric calculation operations described at **106-110** (e.g., the convergence quality metric, the PVE quality metric, and the local count quality metric can then be performed. An alert can be generated by the at least one electronic processor **16** and displayed on the display device **20**. The alert informs a user that there may be potential ROI issues. In one example, in radiation therapy, auto-contouring techniques can be used for critical organs (such as a spine) that require protection from radiation beams. In another example, in myocardial perfusion imaging using SPECT and PET, the at least one electronic processor **16** is programmed to automatically segment and contour a portion of a heart (e.g., a myocardial wall), perform the quality metric calculation operations, and generate an alert for display on the display device **20** to indicate if there is potential of ROI abnormality.

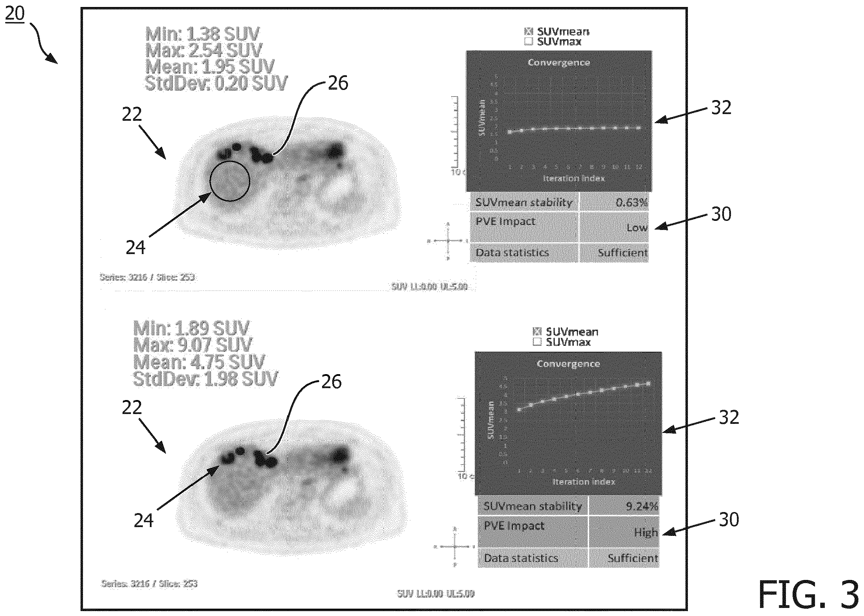

FIGURE 3 shows an example of the display device **20** displaying the at least one reconstructed image **22** and the at least one quality metric **30**. The at least one reconstructed image **22** may be shown with the ROI **24** (including the contours **26**). Several known statistics can also be displayed (e.g., a minimum SUV value, a maximum SUV value, a mean SUV value, and a standard deviation SUV value). These values may also be shown on the generated convergence map **32** (or the generated PVE or local counts density map). The convergence quality metric ($Q_{CONV}$) value, the PVE quality metric ($Q_{PVE}$), and/or the local counts quality metric ($Q_{LC}$) can also be displayed in a table on the display device. In some examples, the displayed metric **30** can be color coded to indicate whether the displayed metric is acceptable (e.g., if the standard deviation is too high or too low). For example, the quality metric **30** can be shaded green for an acceptable value, and red for an unacceptable value). A red quality metric **30** would indicate to the medical professional that the related quantitative value may be less accurate, or the imaging data needs to be reprocessed and/or the imaging data should be re-acquired.

The disclosure has been described with reference to the preferred embodiments. Modifications and alterations may occur to others upon reading and understanding the preceding detailed description. It is intended that the invention be construed as including all such modifications and alterations insofar as they come within the scope of the appended claims.

**Claims**

1. A non-transitory storage medium storing instructions readable and executable by an imaging workstation (**14**) including at least one electronic processor (**16**) operatively connected with a display device (**20**) to perform an image reconstruction method (**100**), the method comprising:

    reconstructing imaging data acquired by an image acquisition device (**12**) using an iterative image reconstruction algorithm with a fixed number of iterations to generate at least one reconstructed image (**22**);
    delineating one or more contours (**26**) of the at least one reconstructed image to determine a region of interest (ROI) (**24**) of the at least one reconstructed image;
    computing at least one quality metric value (**30**) of the ROI, the at least one quality metric value including at least a convergence quality metric; wherein computing the convergence quality metric of the ROI includes computing, during said iterative reconstruction, an intensity versus iteration curve to generate a convergence curve for the ROI (103, 32), and determining a slope of the convergence curve to determine a convergence value for the ROI (112, 30); and displaying (104), on the display device (20), the at least one quality metric value including the generated convergence curve, and the at least one reconstructed image showing the ROI.

**2.** The non-transitory storage medium of claim 1, wherein the computing includes computing a convergence quality metric ($Q_{CONV}$) by estimating the absolute ROI/voxels intensity change during the iterative reconstruction.

**3.** The non-transitory storage medium of claim 2 wherein the displaying further includes displaying a proposed correction of the ROI intensity computed using a correction factor comprising an empirically determined ratio of the converged ROI intensity and the ROI intensity after N iterations for the type of ROI and the iterative image reconstruction algorithm.

**4.** The non-transitory storage medium of claim 1, further including:

comparing the generated curve with a standard convergence curve for the ROI; and
estimating an error of the intensity of the ROI in the reconstructed image due to incomplete convergence using the comparison.

**5.** The non-transitory storage medium of claim 4, further including:
receiving, via a user input device (**18**), a user input from a medical professional to adjust the displayed image for incomplete convergence.

**6.** The non-transitory storage medium of any one of claims 1-5, wherein the computing includes computing a PVE quality metric ($Q_{PVE}$) having a maximum value for a size (d) of the ROI that is greater than two times a resolution (r) of the image acquisition device and decreasing as the size of the ROI decrease below two times the resolution of the image acquisition device.

**7.** The non-transitory storage medium of claim 6, wherein the displaying further includes displaying a proposed correction of the ROI intensity computed based on the PVE quality metric ($Q_{PVE}$).

**8.** The non-transitory storage medium of any one of claims 1-6, wherein the computing includes computing a local counts quality metric ($Q_{LC}$) using an sigmoid-like function approaching a maximum value for the counts of the ROI being greater than a threshold wherein the sigmoid-like function decreases as the counts of the ROI fall below the threshold.

**9.** The non-transitory storage medium of claim 8, wherein the displaying further includes displaying a proposed correction of the ROI intensity computed based on the local counts quality metric ($Q_{LC}$).

**10.** The non-transitory storage medium of any one of claims 6-9, further including:

generating a map including an ROI when the quality metric includes at least one of partial volume correction and count density on a per-voxel scale;
determining a volume value of the ROI in the at least one reconstructed image; and
computing the at least one quality metric value (**30**) by averaging the per-voxel data of the generated map over the volume value of the ROI.

**11.** The non-transitory storage medium of any one of claims 1-10, further including:
generating an overall quality metric value for the ROI by combining the convergence, the partial volume correction, and the count density.

**12.** The non-transitory storage medium of any one of claims 1-11, wherein delineating one or more contours (**26**) of the at least one reconstructed image to determine a ROI (**24**) of the at least one reconstructed image further includes delineating the contours by one of:

receiving, via a user input device (**18**), a user input from a medical professional;
performing, with the at least one electronic processor (**16**), an automated or semi-automated delineation process; or
populating the reconstructed image with contours from a previous imaging session stored in a database (**21**).

**13.** The non-transitory storage medium of any one of claims 1-12, wherein the image reconstruction method (**100**) further includes:

retrieving one or more images stored in a database (**21**);
determining a variance between one or more computed quality metric values of one or more ROIs of the retrieved images and the computed quality metric values of the reconstructed image (**22**); and
saving the determined variance to the database (**21**).

14. The non-transitory storage medium of any one of claims 1-13, wherein the delineating operation is performed automatically or semi-automatically, and the image reconstruction method (**100**) further includes:

generating an alert indicative of ROI abnormality in the at least one reconstructed image (**22**); and
displaying the generated alter on the display device (**20**).

**Patentansprüche**

1. Nichtflüchtiges Speichermedium, das Anweisungen speichert, die von einer Bildgebungs-Workstation (14) lesbar und ausführbar sind, einschließlich mindestens eines elektronischen Prozessors (16), der operativ mit einer Anzeigevorrichtung (20) verbunden ist, um ein Bildrekonstruktionsverfahren (100) durchzuführen, wobei das Verfahren umfasst:

Rekonstruieren von Bilddaten, die von einer Bilderfassungsvorrichtung (12) erfasst wurden, unter Verwendung eines iterativen Bildrekonstruktionsalgorithmus mit einer festen Anzahl von Iterationen, um mindestens ein rekonstruiertes Bild (22) zu erzeugen;
Abgrenzen einer oder mehrerer Konturen (26) des mindestens einen rekonstruierten Bildes, um eine interessierende Region (ROI) (24) des mindestens einen rekonstruierten Bildes zu bestimmen;
Berechnen mindestens eines Qualitätsmetrikwerts (30) der ROI, wobei der mindestens eine Qualitätsmetrikwert mindestens eine Konvergenzqualitätsmetrik enthält; wobei das Berechnen der Konvergenzqualitätsmetrik der ROI das Berechnen einer Intensitäts-gegen-Iterations-Kurve während der iterativen Rekonstruktion umfasst, um eine Konvergenzkurve für die ROI (103, 32) zu erzeugen, und Bestimmen einer Steigung der Konvergenzkurve, um einen Konvergenzwert für die ROI (112, 30) zu bestimmen; und Anzeigen (104) des mindestens einen Qualitätsmetrikwerts, der die erzeugte Konvergenzkurve enthält, und des mindestens einen rekonstruierten Bildes, das die ROI zeigt, auf der Anzeigevorrichtung (20) .

2. Nichtflüchtiges Speichermedium nach Anspruch 1, wobei das Berechnen das Berechnen einer Konvergenzqualitätsmetrik ($Q_{CONV}$) durch Schätzen der absoluten ROI/Voxel-Intensitätsänderung während der iterativen Rekonstruktion umfasst.

3. Nichtflüchtiges Speichermedium nach Anspruch 2, wobei das Anzeigen ferner das Anzeigen einer vorgeschlagenen Korrektur der ROI-Intensität umfasst, die unter Verwendung eines Korrekturfaktors berechnet wurde, der ein empirisch bestimmtes Verhältnis der konvergierten ROI-Intensität und der ROI-Intensität nach N Iterationen für den Typ der ROI und den iterativen Bildrekonstruktionsalgorithmus umfasst.

4. Nichtflüchtiges Speichermedium nach Anspruch 1, ferner umfassend:

Vergleichen der erzeugten Kurve mit einer Standardkonvergenzkurve für die ROI;
Schätzen eines Fehlers der Intensität der ROI in dem rekonstruierten Bild aufgrund unvollständiger Konvergenz unter Verwendung des Vergleichs.

5. Nichtflüchtiges Speichermedium nach Anspruch 4, ferner umfassend:
Empfangen einer Benutzereingabe von einem medizinischen Fachmann über eine Benutzereingabevorrichtung (18), um das angezeigte Bild für unvollständige Konvergenz einzustellen.

6. Nichtflüchtiges Speichermedium nach einem der Ansprüche 1 bis 5, wobei das Berechnen das Berechnen einer PVE-Qualitätsmetrik ($Q_{PVE}$) mit einem Maximalwert für eine Größe (d) der ROI umfasst, der größer als das Zweifache einer Auflösung (r) der Bilderfassungsvorrichtung ist und abnimmt, wenn die Größe der ROI unter das Zweifache der Auflösung der Bilderfassungsvorrichtung sinkt.

7. Nichtflüchtiges Speichermedium nach Anspruch 6, wobei das Anzeigen ferner das Anzeigen einer vorgeschlagenen Korrektur der ROI-Intensität umfasst, die basierend auf der PVE-Qualitätsmetrik ($Q_{PVE}$) berechnet wird.

**8.** Nichtflüchtiges Speichermedium nach einem der Ansprüche 1 bis 6, wobei das Berechnen das Berechnen einer lokalen Zählqualitätsmetrik ($Q_{LC}$) unter Verwendung einer sigmoidartigen Funktion umfasst, die sich einem Maximalwert annähert, damit die Zählungen der ROI größer als ein Schwellenwert sind, wobei die sigmoidartige Funktion abnimmt, wenn die Zählungen der ROI unter den Schwellenwert fallen.

**9.** Nichtflüchtiges Speichermedium nach Anspruch 8, wobei das Anzeigen ferner das Anzeigen einer vorgeschlagenen Korrektur der ROI-Intensität umfasst, die basierend auf der lokalen Zählqualitätsmetrik ($Q_{LC}$) berechnet wird.

**10.** Nichtflüchtiges Speichermedium nach einem der Ansprüche 6 bis 9, ferner umfassend:

Erzeugen einer Karte, die eine ROI enthält, wenn die Qualitätsmetrik mindestens eines von einer Teilvolumenkorrektur und einer Zähldichte auf einer Skala pro Voxel enthält;
Bestimmen eines Volumenwertes des ROI in dem mindestens einen rekonstruierten Bild;
Berechnen des mindestens einen Qualitätsmetrikwerts (30) durch Mitteln der Daten pro Voxel der erzeugten Karte über den Volumenwert der ROI.

**11.** Nichtflüchtiges Speichermedium nach einem der Ansprüche 1 bis 10, ferner umfassend:
Erzeugen eines Gesamtqualitätsmetrikwerts für die ROI durch Kombinieren der Konvergenz, der Teilvolumenkorrektur und der Zähldichte.

**12.** Nichtflüchtiges Speichermedium nach einem der Ansprüche 1 bis 11, wobei das Abgrenzen einer oder mehrerer Konturen (26) des mindestens einen rekonstruierten Bildes zum Bestimmen einer ROI (24) des mindestens einen rekonstruierten Bildes ferner das Abgrenzen der Konturen umfasst durch eines von:

Empfangen einer Benutzereingabe von einem medizinischen Fachmann über eine Benutzereingabevorrichtung (18);
Durchführen eines automatisierten oder halbautomatischen Abgrenzungsprozesses mit dem mindestens einen elektronischen Prozessor (16); oder
Füllen des rekonstruierten Bildes mit Konturen aus einer vorherigen Bildgebungssitzung, die in einer Datenbank (21) gespeichert sind.

**13.** Nichtflüchtiges Speichermedium nach einem der Ansprüche 1 bis 12, wobei das Bildrekonstruktionsverfahren (100) ferner umfasst:

Abrufen eines oder mehrerer Bilder, die in einer Datenbank (21) gespeichert sind;
Bestimmen einer Varianz zwischen einem oder mehreren berechneten Qualitätsmetrikwerten von eins oder mehr ROIs der abgerufenen Bilder und der berechneten Qualitätsmetrikwerte des rekonstruierten Bildes (22); und
Speichern der ermittelten Varianz in der Datenbank (21) .

**14.** Nichtflüchtiges Speichermedium nach einem der Ansprüche 1 bis 13, wobei der Abgrenzungsvorgang automatisch oder halbautomatisch durchgeführt wird, und das Bildrekonstruktionsverfahren (100) ferner umfasst:

Erzeugen einer Warnung, die eine ROI-Anomalie in dem mindestens einen rekonstruierten Bild (22) anzeigt; und
Anzeigen der erzeugten Änderung auf der Anzeigevorrichtung (20).

**Revendications**

**1.** Support de stockage non transitoire stockant des instructions lisibles et exécutables par un poste de travail d'imagerie (14) comprenant au moins un processeur électronique (16) connecté fonctionnellement à un dispositif d'affichage (20) pour exécuter un procédé de reconstruction d'image (100), le procédé consistant à:

reconstruire des données d'imagerie acquises par un dispositif d'acquisition d'image (12) en utilisant un algorithme de reconstruction d'image itératif avec un nombre fixe d'itérations pour générer au moins une image reconstruite (22);
délimiter un ou plusieurs contours (26) de l'au moins une image reconstruite pour déterminer une région d'intérêt (ROI) (24) de l'au moins une image reconstruite;

calculer au moins une valeur métrique de qualité (30) de la ROI, l'au moins une valeur métrique de qualité comprenant au moins une métrique de qualité de convergence; où le calcul de la métrique de qualité de convergence de la ROI comprend le calcul, pendant ladite reconstruction itérative, d'une courbe d'intensité par rapport à l'itération pour générer une courbe de convergence pour la ROI (103, 32), et déterminer une pente de la courbe de convergence pour déterminer une valeur de convergence pour la ROI (112, 30); et afficher (104), sur le dispositif d'affichage (20), l'au moins une valeur métrique de qualité comprenant la courbe de convergence générée, et l'au moins une image reconstruite montrant la ROI.

2. Support de stockage non transitoire selon la revendication 1, dans lequel le calcul comprend le calcul d'une métrique de qualité de convergence ($Q_{CONV}$) en estimant la variation d'intensité de ROI/voxels absolue pendant la reconstruction itérative.

3. Support de stockage non transitoire selon la revendication 2, dans lequel l'affichage comprend en outre l'affichage d'une proposition de correction de l'intensité de la ROI calculée en utilisant un facteur de correction comprenant un rapport déterminé empiriquement de l'intensité de la ROI convergée et de l'intensité de la ROI après N itérations pour le type de ROI et l'algorithme de reconstruction d'image itératif.

4. Support de stockage non transitoire selon la revendication 1, comprenant en outre:

la comparaison de la courbe générée avec une courbe de convergence standard pour la ROI; et
l'estimation d'une erreur de l'intensité de la ROI dans l'image reconstruite due à une convergence incomplète à l'aide de la comparaison.

5. Support de stockage non transitoire selon la revendication 4, comprenant en outre:
la réception, via un dispositif d'entrée utilisateur (18), d'une entrée utilisateur provenant d'un professionnel de la santé pour ajuster l'image affichée pour une convergence incomplète.

6. Support de stockage non transitoire selon l'une quelconque des revendications 1 à 5, dans lequel le calcul comprend le calcul d'une métrique de qualité PVE ($Q_{PVE}$) ayant une valeur maximale pour une taille (d) de la ROI qui est supérieure à deux fois une résolution (r) du dispositif d'acquisition d'image et décroissant lorsque la taille de la ROI diminue en dessous de deux fois la résolution du dispositif d'acquisition d'image.

7. Support de stockage non transitoire selon la revendication 6, dans lequel l'affichage comprend en outre l'affichage d'une proposition de correction de l'intensité de la ROI calculée sur la base de la métrique de qualité PVE ($Q_{PVE}$).

8. Support de stockage non transitoire selon l'une quelconque des revendications 1 à 6, dans lequel le calcul comprend le calcul d'une métrique de qualité de comptages locaux ($Q_{LC}$) en utilisant une fonction de type sigmoïde approchant une valeur maximale pour les comptages de la ROI qui est supérieur à un seuil où la fonction de type sigmoïde diminue à mesure que les comptages de la ROI tombent en dessous du seuil.

9. Support de stockage non transitoire selon la revendication 8, dans lequel l'affichage comprend en outre l'affichage d'une proposition de correction de l'intensité de la ROI calculée sur la base de la métrique de qualité des comptages locaux ($Q_{LC}$).

10. Support de stockage non transitoire selon l'une quelconque des revendications 6 à 9, consistant en outre à:

générer une carte comprenant une ROI lorsque la métrique de qualité comprend au moins une correction de volume partielle et une densité de comptage sur une échelle par voxel;
déterminer une valeur de volume de la ROI dans l'au moins une image reconstruite; et
calculer l'au moins une valeur de métrique de qualité (30) en faisant la moyenne des données par voxel de la carte générée sur la valeur de volume de la ROI.

11. Support de stockage non transitoire selon l'une quelconque des revendications 1 à 10, consistant en outre à:
générer une valeur de métrique de qualité globale pour la ROI en combinant la convergence, la correction de volume partiel, et la densité de comptage.

12. Support de stockage non transitoire selon l'une quelconque des revendications 1 à 11, dans lequel la délimitation d'un ou plusieurs contours (26) de l'au moins une image reconstruite pour déterminer une ROI (24) de l'au moins une image reconstruite comprend en outre la délimitation des contours au moyen d'un parmi:

la réception, via un dispositif d'entrée utilisateur (18), d'une entrée utilisateur provenant d'un professionnel de la santé;

l'exécution, avec l'au moins un processeur électronique (16), d'un processus de délimitation automatisé ou semi-automatisé; ou

le remplissage de l'image reconstruite avec les contours d'une session d'imagerie précédente stockée dans une base de données (21).

13. Support de stockage non transitoire selon l'une quelconque des revendications 1 à 12, dans lequel le procédé de reconstruction d'image (100) consiste en outre à:

récupérer une ou plusieurs images stockées dans une base de données (21);

déterminer une variance entre une ou plusieurs valeurs de métrique de qualité calculées d'une ou plusieurs ROI des images récupérées et les valeurs de métrique de qualité calculées de l'image reconstruite (22); et

enregistrer la variance déterminée dans la base de données (21).

14. Support de stockage non transitoire selon l'une quelconque des revendications 1 à 13, dans lequel l'opération de délimitation est effectuée automatiquement ou semi-automatiquement, et le procédé de reconstruction d'image (100) consiste en outre à:

générer une alerte indiquant une anomalie de la ROI dans l'au moins une image reconstruite (22); et

afficher l'altération générée sur le dispositif d'affichage (20).

FIG. 1

EP 3 631 762 B1

100

```
┌─────────────────────────────────────────────────────┐
│  Reconstruct imaging data to generate at least one   │ ── 102
│              reconstructed image                     │
└─────────────────────────────────────────────────────┘
                          │
                          ▼
┌─────────────────────────────────────────────────────┐
│             Calculate convergence curve              │ ── 103
└─────────────────────────────────────────────────────┘
                          │
                          ▼
┌─────────────────────────────────────────────────────┐
│  Delineate contours of reconstructed image to determine ROI │ ── 104
└─────────────────────────────────────────────────────┘
                          │
                          ▼
┌─────────────────────────────────────────────────────┐
│        Compute one or more quality metrics of ROI    │ ── 106
│                                                       │
│   108          110                    112             │
│  ┌──────────┐ ┌──────────────┐ ┌──────────────┐       │
│  │ Compute  │ │ Compute local│ │   Compute    │       │
│  │   PVE    │ │counts density│ │ convergence  │       │
│  └──────────┘ └──────────────┘ └──────────────┘       │
└─────────────────────────────────────────────────────┘
                          │
                          ▼
┌─────────────────────────────────────────────────────┐
│  Display reconstructed image and computed quality metric │ ── 114
└─────────────────────────────────────────────────────┘
```

# FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008267477 A